(19) Europäisches Patentamt
European Patent Office
Office européen des brevets

(11) **EP 3 685 648 B1**

(12) **EUROPÄISCHE PATENTSCHRIFT**

(45) Veröffentlichungstag und Bekanntmachung des Hinweises auf die Patenterteilung:
**23.03.2022   Patentblatt 2022/12**

(21) Anmeldenummer: **20401002.9**

(22) Anmeldetag: **22.01.2020**

(51) Internationale Patentklassifikation (IPC):
*A01B 69/04* (2006.01)      *A01B 79/00* (2006.01)
*A01B 79/02* (2006.01)      *G01C 21/34* (2006.01)

(52) Gemeinsame Patentklassifikation (CPC):
**A01B 79/005; A01B 69/008; A01B 79/02**

(54) **SYSTEM UND VERFAHREN ZUR IDENTIFIZIERUNG VON ZEITFENSTERN UND FLÄCHENBEREICHEN EINES LANDWIRTSCHAFTLICH GENUTZTEN FELDES MIT GÜNSTIGEN BEDINGUNGEN FÜR EINEN WIRKUNGSVOLLEN UND UMWELTGERECHTEN EINSATZ UND/ODER DIE BEFAHRBARKEIT VON LANDMASCHINEN**

SYSTEM AND METHOD FOR IDENTIFYING TIME WINDOWS AND AREAS OF AN AGRICULTURALLY USED FIELD WITH FAVOURABLE CONDITIONS FOR AN EFFECTIVE AND ENVIRONMENTALLY ACCEPTABLE USE AND / OR DRIVEABILITY OF AGRICULTURAL MACHINES

SYSTÈME ET PROCÉDÉ D'IDENTIFICATION DE FENÊTRES TEMPORELLES ET DE ZONES SUPERFICIELLES D'UN CHAMPS AGRICOLE PRÉSENTANT DES CONDITIONS AVANTAGEUSES POUR UNE UTILISATION EFFICACE ET RESPECTUEUSE DE L'ENVIRONNEMENT ET/OU FACILITÉ DE CONDUITE DES MACHINES AGRICOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2019   DE 102019200794**

(43) Veröffentlichungstag der Anmeldung:
**29.07.2020   Patentblatt 2020/31**

(73) Patentinhaber: **Amazonen-Werke H. Dreyer SE & Co. KG**
**49205 Hasbergen (DE)**

(72) Erfinder: **Wild, Karl**
**01454 Ullersdorf (DE)**

(56) Entgegenhaltungen:
**EP-A1- 3 340 130      US-A1- 2017 127 606**
**US-A1- 2018 039 600      US-A1- 2018 068 416**
**US-A1- 2018 092 295**

**Beschreibung**

Die Erfindung betrifft ein Verfahren zur Identifizierung von Zeitfenstern und Flächenbereichen eines landwirtschaftlich genutzten Feldes mit günstigen Bedingungen für einen wirkungsvollen und umweltgerechten Einsatz und/oder die Befahrbarkeit von Landmaschinen.

Ein landwirtschaftlich genutztes Feld mit und auch ohne Pflanzenbestand ist in den meisten Fällen eine sehr inhomogene Sache. Innerhalb der Fläche eines Feldes variieren Bodenarten, Nährstoffgehalte, Bodenfeuchtigkeitsgehalt, Bodenverdichtungen etc. Der Kulturpflanzenbestand kann unterschiedlich gut entwickelt sein, einen mehr oder weniger großen Krankheits- oder Schädlingsbefall bzw. Unkrautbefall mit unterschiedlichen Stärken aufweisen. Um dem Rechnung zu tragen, wurde schon vor einigen Jahren das Precision Farming entwickelt. Nicht mehr wie früher, als ein Feld als eine Einheit betrachtet und deshalb einheitlich bewirtschaftet wurde, sondern ein Feld wird gegenwärtig teilflächenspezifisch bearbeitet, d.h. die verschiedenen Bereiche eines Feldes werden auf Basis von Boden- und Pflanzenparametern unterschiedlich bearbeitet.

In der US 2018 0 092 295 A1 ist vorgesehen, eine zu bearbeitende Fläche sensorisch zu erfassen, um die Bodeneigenschaften zu bestimmen. Durch diese Daten kann bestimmt werden, ob eine Fläche trocken genug für eine Bearbeitung ist und welche Maschineneinstellungen basierend auf den Bodeneigenschaften bei der Bearbeitung gewählt werden müssen.

Zwei Einflussgrößen sind bisher aber unberücksichtigt geblieben. Dies betrifft teilflächenspezifische Wetterdaten und teilflächenspezifische kurzzeitige Abläufe/Veränderungen. Mittlerweile stellen zwar manche Landwirte eine Wetterstation am Feldrand oder im Bestand auf, dies reicht aber wie Untersuchungserbnisse zeigen, bei weiten nicht aus. Dies soll an einigen Beispielen näher erläutert werden.

Pflanzenschutz: Damit eine gute Basis für eine ausreichende biologische Wirksamkeit eines Pflanzenschutzmittels (PSM) gegeben ist und dem Umweltschutz Rechnung getragen wird, werden nach der guten fachüblichen Praxis PSM nur ausgebracht, wenn die Windgeschwindigkeit unter 5 m/s, die Temperatur unter 25° C und die relative Luftfeuchte über 30 % liegen. Die Information über diese Größen erhält der Landwirt über den Wetterbericht, über eine betriebseigene Wetterstation oder über ein Taschenmessgerät (oder eine Wetterstation), dass er am Feldrand vor Beginn der PSM-Applikation einsetzt.

Es hat sich aber gezeigt, dass selbst die Messung am Feldrand oder eine Wetterstation im Feld bei weitem nicht widergibt, welche dieser Einflüsse im gesamten Feld tatsächlich vorliegen. Die Unterschiede bei Temperatur, Luftfeuchte und Windgeschwindigkeit können gravierend sein. Bei Untersuchungen stellte sich z. B. heraus, dass in einem Feld Temperaturunterschiede von mehr als 20 °C oder Unterschiede in der relativen Luftfeuchte von bis zu 30 % - Punkten auftreten können. Deshalb sind die am Feldrand ermittelten meteorologischen Größen nur wenig hilfreich. Außerdem können sich diese Parameter in sehr kurzer Zeit ändern. Der Landwirt weiß praktisch nichts über die tatsächlichen Verhältnisse in den einzelnen Teilbereichen seines Feldes. Bedingt durch diese großen Unterschiede in einem Feld können zur selben Zeit Bereiche eines Feldes innerhalb und viele andere Bereiche weit außerhalb der passenden meteorologischen Parameterspannen für die PSM-Ausbringung liegen. Damit ist die biologische Wirksamkeit des PSM in bestimmten Bereichen eines Feldes nicht mehr gegeben. Die PSM-Applikation ist nutzlos und führt nur zu einer negativen Beeinträchtigung der Umwelt.

Durch den Klimawandel werden generell höhere Temperaturen, geringere Luftfeuchtigkeitswerte und mehr Wind erwartet, wodurch sich die Bedingungen für die Ausbringung von chemischen Pflanzenschutzmitteln verschlechtern werden: Die Zeitfenster mit optimalen meteorologischen Bedingungen werden weniger und kürzer.

Ähnliches trifft auch für physikalische Pflanzenschutzmaßnahmen (z.B. mechanische oder thermische Unkrautbekämpfung) zu. Bei ungünstigen meteorologischen Bedingungen überstehen Unkrautpflanzen die Maßnahmen, sie erholen sich, wachsen z. B. wieder an oder treiben neu aus. Gleiches gilt auch für die Krautabtötung vor der Kartoffelernte.

Getreideernte: Die Getreidefeuchte hat einen erheblichen Einfluss auf den Druschvorgang mit einem Mähdrescher. Hohe Getreidefeuchten verringern den Durchsatz und erhöhen den Dieselverbrauch. Unterschiedliche Feuchtigkeitsgehalte hängen nicht nur von unterschiedlichen Boden und Pflanzenparametern ab, sondern auch von unterschiedlicher Abtrocknung während des Tagesverlaufs in den verschiedenen Bereichen eines Feldes, hervorgerufen durch unterschiedliche meteorologische Bedingungen. Es wäre deshalb günstig, den Drusch immer dort durchzuführen, wo momentan die niedrigsten Feuchtigkeitswerte vorliegen, d.h. von Teilfläche zu Teilfläche sich durcharbeiten und nicht wie früher das Feld als eine Einheit zu sehen und nur auf eine optimale Fahrweggestaltung achten. Eine Lösung, die diese Vorgehensweise ermöglicht, ist gegenwärtig nicht bekannt.

Bodenbearbeitung: Hier gilt ähnliches wie bei der Getreideernte. Ein optimales Bearbeitungsergebnis mit einem geringen Energieverbrauch wird dort erzielt, wo die Bodenfeuchte in einem guten Bereich liegt. Sie variiert aber ähnlich wie die Getreidefeuchtigkeit. Ist ein Feld sehr feucht und sind Abtrocknungsvorgänge am Laufen, dann wäre es günstig die Bearbeitung dort zu beginnen, wo die Bodenfeuchtigkeitswerte am niedrigsten sind. Ist es dagegen sehr trocken und es finden Abtrocknungsvorgänge statt, dann wird besser dort begonnen, wo die Bodenfeuchtigkeitswerte am höchsten sind. Finden Befeuchtungsvorgänge, z.B. durch leichten Regen statt, wird mit den feuchtesten Teilbereichen begonnen. Diese Konzepte sind aber gegenwärtig nicht anwendbar, da kleinräumige Abtrocknungsvorgänge bzw. Befeuchtungsvorgänge nicht erfasst werden.

Befahrbarkeit: Ein Extremfall hinsichtlich der Bodenfeuchte stellt ein Wert dar, bei dem ein Feld nicht mehr befahren werden kann. Es gibt zwar noch andere Faktoren (z.B. Bodenart, durchgeführte Bearbeitung), aber die Bodenfeuchte hat den stärksten Einfluss. Hierbei geht es neben dem ganzen Feld vor allem um Teilbereiche ("nasse Stellen"). Diese sind in manchen Jahren zu bestimmten Zeiten befahrbar, in anderen Jahren aber nicht, was der Landwirt aber vorher nicht weiß. Fährt er sich mit einem Fahrzeug in einer nassen Stelle fest, zieht dies meistens höhere Kosten nach sich (Bergung, Erntezeitverlust etc.). Bei entsprechender Abtrocknung kann sich innerhalb sehr kurzer Zeit der Status einer Nassstelle von "nicht befahrbar" auf "befahrbar" ändern. Erfasst wird dies gegenwärtig aber nicht.

Es ist daher Aufgabe der Erfindung, Möglichkeiten für die Verbesserung des Einsatzes von Landmaschinen bei der Bearbeitung von landwirtschaftlich genutzten Feldern anzugeben, wobei auch der Aspekt der Energieeinsparung eine Rolle spielen soll.

Erfindungsgemäß wird diese Aufgabe mit einem Verfahren, das die kennzeichnenden Merkmale des Anspruchs 1 aufweist, gelöst.

Die Erfindung basiert auf dem Einsatz mindestens eines unbemannten Luftfahrzeugs UAV (umgangssprachlich: Drohne). Dieses wird je nach Aufgabe mit entsprechender Sensorik ausgestattet. Dazu zählen optische Detektoren, wie z.B. Kameras im VIS-, NIR- und/oder im NIR-Bereich (z.B. Hyperspektralkamera), Temperatursensoren, insbesondere berührungslos erfassende Temperatursensoren, Hygrometer, Windmesser (Geschwindigkeit und Richtung), RADAR-, LIDAR- und auch Ultraschallsensoren.

Zu Beginn der jeweiligen Arbeiten auf einem Feld kann ein Prescan mit der Ermittlung von Messwerten über die Fläche eines Feldes oder einer größeren zur Bearbeitung oder zum Befahren vorgesehenen Bereich einer Fläche eines jeweiligen Feldes durchgeführt werden. Dazu fliegt das UAV die gesamte bzw. die jeweilige Fläche ab, die bearbeitet werden soll, und erfasst die verschiedenen Parameter ortsaufgelöst auf deren Basis eine erste Bearbeitungs- bzw. Streckenkarte erstellt werden kann. Danach kann mit oder ohne Durchführung einer vorab Ermittlung von Messwerten das UAV so gesteuert, dass es die jeweilige Landmaschine begleitet, d.h. bevorzugt in einem gewissen Abstand vor der Landmaschine fliegt. Zwischendurch kann immer wieder das gesamte Restfeld gescannt werden. Damit können Trends in den Parameterverläufen ermittelt und entsprechend berücksichtigt werden.

Bei dem erfindungsgemäßen Verfahren werden mit Sensoren, die am UAV vorhanden sind, meteorologische Messwerte, Messwerte über die Beschaffenheit von Pflanzen und/oder des Bodens ortsaufgelöst innerhalb der Fläche eines Feldes oder eines Feldbereichs erfasst. Mit den erfassten Messwerten werden ortsaufgelöst Werte für einen meteorologisch basierten Einsatzindex (MBEI) berechnet. Mittels der berechneten MBEI wird eine jeweilige Landmaschine gesteuert und/oder betrieben wird. Dies kann insbesondere den Fahrweg, der genutzt werden soll bzw. kann und auch Parameter mit denen der jeweilige Bearbeitungsprozess beeinflusst werden kann, beinhalten.

Die ortsaufgelöst bestimmten MBEI-Werte werden unter Berücksichtigung mindestens zweier Messwerte genutzt, die ausgewählt sind aus Lufttemperatur, der Temperatur von Pflanzen; relative Luftfeuchte, Windgeschwindigkeit und - richtung, Thermik, Pflanzenbestand, Vegetationsdichte, Bodenfeuchte, Bodendichte, Bodenart, Oberflächenbeschaffenheit nutzbare Feldkapazität und vorhandenes Oberflächenwasser berechnet. Dabei wird ein jeweiliger Gewichtungsfaktor berücksichtigt.

Erfindungsgemäß können also je nach zu verrichtender Bearbeitung bestimmte Parameter herangezogen und entsprechend verrechnet werden.

Beim Ausbringen von Pflanzenschutzmittel oder einer anderen Maßnahme zum Pflanzenschutz kann mit einer NIR-Kamera im Überflug die Temperatur des Pflanzenbestandes erfasst werden. Parallel dazu kann mit mindestens einem Temperatursensor, der auch an einem UAV angebracht sein kann, in ca. 500 mm, also in einem Abstand zwischen Boden oder dem oberen Rand der Pflanzen im Bereich 300 mm bis 750 mm oder in einem entsprechenden Abstand zur Oberfläche des Bodens, wenn kein Pflanzenbestand vorhanden ist, die Lufttemperatur erfasst werden.

Die relative Luftfeuchte kann mit einem Hygrometer ebenfalls in diesem Höhenbereich ermittelt werden.

Außerdem können Informationen zur Thermik (über bekannte Messverfahren für thermische Turbulenzen) erfasst werden. Darüber hinaus können Winddaten erhoben und berücksichtigt werden, die über bekannte Verfahren ermittelt werden können.

Für alle ortsaufgelöst erfassten Messwerte gemeinsam oder für jeden einzelnen dieser ortsaufgelöst erfassten Messwerte kann eine Karte erstellt werden, die die Begebenheiten in den einzelnen Teilbereichen des Feldes oder des Flächenbereichs ortsaufgelöst repräsentiert.

Durch Verschneidung dieser Parameter bzw. Karten können meteorologisch basierte Einsatzindices ("MBEI") errechnet und auch in Form einer Karte dargestellt werden. Aufbauend auf der MBEI-Karte (und ggf. der Luftfeuchtekarte) können zusätzlich in Teilbereichen des Feldes hochauflösende Bilder im VIS- und NIR-Bereich von (Einzel-)Pflanzen gewonnen und mit Hilfe von bildanalytischen Verfahren der Benetzungsgrad (Tau, Pflanzenschutzmittel, etc.) festgestellt werden. Die MBEI-Werte können dabei mit folgender Gleichung für die jeweiligen Positionen einer Feldfläche berechnet werden:

$$MBEI_{PS} = A + B * \text{Temperatur [°C]} - C * \text{rel. Luftfeuchte [\%]} + D * \text{Windgeschwindigkeit [m/s]} + \text{Thermikwert} - \text{Benetzungswert der Pflanzenoberfläche}$$

mit A = 0,6 B = 0,02 C = 0,005 D = 0,02
wobei die Temperatur = (3 * Lufttemperatur in 500 mm oberhalb Applikationsebene + Temperatur Applikationsebene) / 4 ist und wobei

die Applikationsebene die Oberfläche der Pflanzen, auf die das jeweilige Pflanzenschutzmittel PSM ausgebracht wird oder der Boden, falls kein Pflanzenbestand vorhanden ist,

der Thermikwert = 0,075 bei einer mittleren Thermik und 0,1 bei einem starken Termikwert,

der Benetzungswert = 0,03 für einen mittleren Benetzungsgrad und 0,06 für einen hohen (ohne Pflanzenbewuchs Wert = 0) ist.

Generell ist davon auszugehen, dass die Globalstrahlung in einem Feld gleich ist. Sollte sie aber berücksichtigt werden, so ändert sich die obige Gleichung. Es wird zusätzlich folgender Term aufgenommen:

-    + E * Globalstrahlung [W/m$^2$] mit E = 0,001

-    wobei A ändert sich zu A = 0,05.

Um von den punktuell über die jeweilige Fläche eines Feldes ortsaufgelöst gewonnen Messwerten hin zu einer Karte zu kommen, können geostatistische Methoden, wie z. B. Kriging oder Nearest Neighbourhood Analysis angewendet werden.

Durch das Landmaschinen begleitende Fliegen des UAV und durch Restfeldscans können die Karten bzw. die ortsaufgelöst erfassten und bestimmten MBEI-Werte kontinuierlich aktualisiert werden. Auch kann eine MBEI-Berechnung mit Wetterprognosedaten durchgeführt werden, so dass ersichtlich wird, ob durch die Wetterveränderung die MBEI-Werte günstiger oder ungünstiger werden. Auf Basis der so ortsaufgelöst ermittelten MBEI-Werte kann nun die jeweilige Bearbeitung durchgeführt werden. Je nach Maßnahme sind entweder niedrige oder hohe MBEI-Werte günstig. Sind z. B. niedrige MBEI-Werte wie bei der PSM-Ausbringung gefragt, so kann folgender Maßen vorgegangen werden: Ist auf Basis der Wetterprognose mit einer kurzfristigen Entwicklung zu ungünstigeren MBEI-Werten zu rechnen, so können die Teilflächen mit dem höchsten MBEI-Wert zuerst bearbeitet und/oder befahren werden (durch die Wetterveränderung können die MBEI-Werte so ungünstig werden, dass ein PSM-Applikation nicht mehr durchgeführt werden soll).

Anschließend können Bereiche mit niedrigerem MBEI-Wert bearbeitet und/oder befahren werden. Ist jedoch mit günstigeren MBEI-Werten zu rechnen, so kann zuerst mit den Teilflächen mit den niedrigeren MBEI-Werten begonnen werden (die anderen Teilflächen verbessern sich in der Zwischenzeit). Mit Hilfe bekannter Software kann zusätzlich der kürzeste Fahrweg ermittelt werden, um die Teilbereiche entsprechend der MBEI-Einteilung abzuarbeiten. Dabei kann die Arbeitsbreite der Landmaschine berücksichtigt werden, so dass keine Überlappungen oder unbearbeitete Streifen entstehen. Die ermittelten MBEI-Werte können auch für die Einstellung und Optimierung der Maschine/Gerätes genutzt werden. So können z.B. bei höheren MBEI-Werten der Spritzdruck einer Spritze reduziert bzw. eine Reduzierung der Fahrgeschwindigkeit bei thermischer Unkrautbekämpfung durchgeführt werden. Wird ein bestimmter Grenz-MBEI-Wert überschritten (z. B. MBEI = 0,8), so sollte die Maßnahme eingestellt bzw. erst gar nicht begonnen werden, da keine ausreichende Wirksamkeit gegeben ist, bzw. die Verluste / Abdriften zu groß wären (==> Nutzung der verfügbaren Zeitfenster). Der MBEI-Grenzwert hängt auch von der verwendeten Pflanzenschutztechnik ab. Verfügt das Pflanzenschutzgerät z.B. über ein Trägerluftsystem, dann kann der MBEI-Grenzwert auf 1,0 angehoben werden. Die Ermittlung eines Benetzungsgrades kann nicht nur vor der Applikation (Tau), sondern auch in bestimmten Abständen nach der PSM-Applikation (PSM) durchgeführt werden. Mit diesen Informationen kann beim weiteren Applikationsvorgang die Einstellung der Maschine optimiert werden.

Bei der Getreideernte kann das Verfahren ähnlich wie beim Pflanzenschutz durchgeführt werden. Auf das landmaschinenbegleitende Fliegen des UAVs kann dabei ebenso wie auf die Ermittlung eines Benetzungsgrades verzichtet werden. Die Restfeldscans sollten aber durchgeführt werden. Für eine genauere MBEI-Werte-Bestimmung können bei der Getreideernte noch RADAR-Scans vom Pflanzenbestand erfasst werden. Damit der Einfluss der Vegetationsdichte bei den RADAR-Scans kompensiert werden kann, sollten Bilder über eine NIR- und VIS-Kamera (oder Hyperspektralkamera) gewonnen werden, auf deren Basis der NDVI ("Normalized Difference Vegetation Index") oder ein anderer massenbeschreibender Index bestimmt werden kann. Die MBEI-Werte für die Getreideernte als Bearbeitungsmaßnahme können mit einer Formel berechnet werden, die zum Großteil mit der Formel für $MBEI_{PS}$ identisch ist (incl. Konstante und Koeffizienten):

$$MBEI_{MD} = A + B * \text{Temperatur [°C]} - C * \text{rel. Luftfeuchte [\%]} + D * \text{Windgeschwindigkeit [m/s]} + F - G * \text{RADAR\_Klasse} * NDVI$$

mit F = 1,3 und G = 0,11

Da je nach Kultur und verwendeter Radartechnik (oder anderer Sensorik) die Spannweite der feuchtigkeitsabhängigen Radarreflexionskoeffizienten sehr groß sein können, werden nach allgemein üblichen Verfahren die Reflexionskoeffizienten in Klassen von 1 bis 8 eingeteilt, die von Feuchtigkeitswerten von 10 % bis 24 % abgeleitet werden können. Für den NDVI werden die tatsächlichen Werte in einem Bereich von 0,2 bis 1,0 herangezogen.

Soll die Globalstrahlung mitberücksichtigt werden, so wird wieder der bereits bekannte Term aufgenommen:

- + E * Globalstrahlung [W/m$^2$] mit E = 0,001
- A ändert sich zu A = 0,05
- F ändert sich zu F = 1,7
- G ändert sich zu G = 0,15

Da mit diesem Verfahren die Feuchtigkeit des Getreides nur als Relativwert ermittelt wird, kann eine Kalibrierung dadurch erfolgen, dass der Mähdrescher zu Beginn über eine Strecke von ca. 25 m drischt und die Angaben des Feuchtigkeitssensors aus dem Mähdrescher zur Kalibrierung herangezogen werden. Anstelle der RADAR-Werte können auch feuchtigkeitsabhängige Werte eines anderen Sensors-Systems verwendet werden. Im Gegensatz zum Pflanzenschutz ist es beim Mähdrusch umso besser, je höher die MBEI-Werte sind.

Bei der Bodenbearbeitung kann das Verfahren ähnlich wie beim Pflanzenschutz durchgeführt werden. Auf das landmaschinenbegleitende Fliegen des UAVs kann ebenso wie auf die Ermittlung eines Benetzungsgrades der Pflanzen verzichtet werden. Die Restfeldscans sollten aber durchgeführt werden. Der jeweilige MBEI-Wert kann dabei mit folgender Formel berechnet werden:

$$MBEI_{BB} = A + B * \text{Temperatur [°C]} - C * \text{rel. Luftfeuchte [\%]} + D * \text{Windgeschwindigkeit [m/s]} + E * \text{Globalstrahlung [W/m}^2\text{]} + F - G * \text{RADAR\_Klasse} * \text{Hyperspektral\_Wert}$$

mit A = 0,05 B = 0,02 C = 0,005 D = 0,02 E = 0,001 F = 1,3 G = 0,11
wobei

$$\text{die Temperatur} = (0,5 * \text{Lufttemperatur in 2000 mm über Boden} + 0,5 * \text{Bodentemperatur})$$

Die Globalstrahlung wird hier berücksichtigt, da der Boden innerhalb eines Feldes unterschiedlich gefärbt sein kann und die Farbunterschiede bei einer stärkeren Globalstrahlung zu einer stärkeren unterschiedlichen Erwärmung des Bodens führen als bei einer schwächeren. Die Farbe des Bodens kann mit einer VIS-Kamera ermittelt werden. Da aber für die Feststellung der Bodentemperatur eine NIR-Kamera erforderlich ist, ist es besser eine Hyperspektral-Kamera einzusetzen. Mit Hilfe geeigneter statistischer Algorithmen werden die Spektraldaten umgerechnet, so dass sich daraus Werte in einer Bandbreite von 0,1 bis 1,0 ergeben können.

Der berechnete $MBEI_{BB}$ kann zusätzlich noch hinsichtlich der Bodenart optimiert werden. Für leichte Böden (z. B. Sandböden) wird er mit 1,1 multipliziert, für schwere Böden (z. B. Tonböden) mit 0,9.

Im Gegensatz zu den vorher aufgestellten Verfahren, ist bei der Bodenbearbeitung sowohl ein unterer (z. B. 0,5) als auch oberer Grenzwert (z. B. 1,1) anzugeben. Außerhalb dieses Bereiches ist keine gute Bodenbearbeitung mehr möglich. Für eine genauere Festlegung des unteren und oberen Grenzwertes ist eine schlagbezogene Kalibrierung hilfreich. Dazu teilt der Landwirt bei den ersten Einsätzen dem System mit, welche Bearbeitungsergebnisse in einzelnen Teilbereichen des Feldes zu beobachten waren. Mit diesen Angaben und den Messwerten der verschiedenen Sensoren erfolgt dann die Berechnung des Kalibrationsmodel.

Bei der Bestimmung der Befahrbarkeit eines Feldes kann das Verfahren ähnlich wie beim Pflanzenschutz durchgeführt werden. Es kann dabei aber auf das landmaschinenbegleitende Fliegen des UAVs in manchen Situationen nicht verzichtet werden. Die Restfeldscans können auch durchgeführt werden. Für eine genauere Bestimmung der MBEI-Werte können noch RADAR-Scans vom Boden (Feuchte und Bodenverdichtungen) ermittelt und Bilder über eine NIR- und VIS-Kamera (oder Hyperspektralkamera) genutzt werden. Aus den Kamerabildern kann bildanalytisch ermittelt werden, wie die ortsaufgelöste Krümelstruktur/Oberflächenbeschaffenheit ist, ob eine Pflanzenbedeckung, Bereiche, die nicht mit Erde bedeckt sind, was insbesondere den Anteil an Stein betrifft oder sichtbares Oberflächenwasser vorliegen. Für eine weitere Verbesserung der Genauigkeit bei der MBEI-Werte-Bestimmung können die Karten der erhobenen Parameter noch mit Bodenkarten (Bodenart, nutzbare Feldkapazität etc.) ergänzt werden.

Unter Nichtbefahrbarkeit fallen auch Zustände, bei denen mit dem jeweiligen Fahrzeug zu tiefe Fahrrinnen im Boden ausgebildet werden.

Die jeweiligen MBEI-Werte können dabei mit folgender Formel berechnet werden:

$$\text{MBEI}_{BF} = A * (\text{Temperatur in 2 m Höhe - Bodentemperatur [K]}) + B * (\text{rel.}$$
$$\text{Luftfeuchte in 2 m Höhe – Boden\_rel.Luftfeuchte [\%]}) + C * \text{RADAR\_Klasse} + D *$$
$$\text{Hyperspektral\_Wert} + E * \text{sichtbares Wasser} - F * \text{Tage seit letzter}$$
$$\text{Bodenbearbeitung [Anzahl]} + G * \text{Arbeitstiefe [cm]}$$

mit A = 0,025 B = 0,03 C =-0,03 D = 0,02 E = 1 F = 0,0001 G = 0,001
wobei

- sichtbares Wasser den Wert 1 für "vorhanden" und 0 für nicht vorhanden annimmt, und mit
- Arbeitstiefe die Tiefe bei der letzten Bodenbearbeitung gemeint ist.

Mit Hilfe geeigneter statistischer Algorithmen können die Spektraldaten umgerechnet werden, so dass sich daraus Werte in einer Bandbreite von 1 bis 5 ergeben können. Mit Hilfe der Kamerabilder wird auch festgestellt, ob sichtbares Wasser vorhanden ist.

Der berechnete $\text{MBEI}_{BF}$ kann zusätzlich noch hinsichtlich der Bodenart optimiert werden. Für leichte Böden (z. B. Sandböden) wird er mit 0,9 multipliziert, für schwere Böden (z. B. Tonböden) mit 1,1.

Hohe $\text{MBEI}_{BF}$ - Werte (z. B. oberhalb von 0,8) weisen auf eine schlechte Befahrbarkeit hin. Zu berücksichtigen ist aber noch der Bodendruck, der vom Fahrzeug ausgeht. Je nach Gewicht, Fahrwerk, Reifenbreite/-auflagefläche etc. liegt ein unterschiedlich hoher Bodendruck vor. Je niedriger der Bodendruck des Fahrzeuges ist, desto höher kann $\text{MBEI}_{BF}$ - Grenzwert angesetzt werden.

Mit den hier beschriebenen Verfahrensweisen können die günstigen Zeitfenster und Feldzonen erkannt werden, so dass eine umweltschonende, effektive und kostensparende Bewirtschaftung durchgeführt werden kann.

Es kann/können mit der Erfindung also auch in Abhängigkeit der ortsaufgelöst ermittelten MBEI-Werte der Einsatzzeitpunkt und/oder der Einsatzort der jeweiligen Landmaschine bestimmt werden. So kann beispielsweise der Beginn und der Ort des Beginns einer Bearbeitung oder Befahrens und nachfolgend dann die Fahrstrecke für eine optimierte Bearbeitung oder ein Festfahren der Landmaschine vermeidendes Befahren der jeweiligen zu bearbeitenden oder zu befahrenden Feldfläche bestimmt und bei der Steuerung der Landmaschine berücksichtigt werden.

**Patentansprüche**

1. Verfahren zur Identifizierung von Zeitfenstern und Flächenbereichen eines landwirtschaftlich genutzten Feldes mit günstigen Bedingungen für einen wirkungsvollen und umweltgerechten Einsatz und/oder die Befahrbarkeit von Landmaschinen, bei dem

   mit mindestens einem unbemannten mit Sensoren bestückten Luftfahrzeug meteorologische Messwerte, Messwerte über die Beschaffenheit von Pflanzen und/oder des Bodens ortsaufgelöst innerhalb der Fläche eines Feldes oder eines Feldbereichs erfasst und
   mit den erfassten Messwerten ortsaufgelöst Werte für einen meteorologisch basierten Einsatzindex berechnet werden und

eine jeweilige Landmaschine auf Basis der ortsaufgelöst ermittelten Werte für den meteorologisch basierten Einsatzindex gesteuert und/oder betrieben wird; wobei

die Werte für den meteorologisch basierten Einsatzindex unter Berücksichtigung mindestens zweier Messwerte, die ausgewählt sind aus Lufttemperatur, der Temperatur von Pflanzen; relative Luftfeuchte, Windgeschwindigkeit und -richtung, Thermik, Pflanzenbestand, Vegetationsdichte, Bodenfeuchte, Bodendichte, Bodenart, Oberflächenbeschaffenheit nutzbare Feldkapazität und vorhandenes Oberflächenwasser unter Berücksichtigung jeweiliger Gewichtungsfaktoren berechnet werden

**dadurch gekennzeichnet, dass**

je nach zu verrichtender Arbeit bestimmte Parameter herangezogen und entsprechend verrechnet werden und der jeweilige Einsatzzeitpunkt und Einsatzort der jeweiligen Landmaschine in Abhängigkeit der ortsaufgelöst erfassten Werte für den meteorologisch basierten Einsatzindex bestimmt wird.

**2.** Verfahren nach Anspruch 1, **dadurch gekennzeichnet, dass** mit den berechneten Werten für die meteorologisch basierten Einsatzindizes eine Karte des jeweiligen Feldes oder Feldbereichs erstellt wird, die für die Steuerung und/oder den Betrieb der jeweiligen Landmaschine genutzt wird.

**3.** Verfahren nach dem vorhergehenden Anspruch, **dadurch gekennzeichnet, dass** die jeweilige Karte mit den punktuell über die jeweilige Fläche eines Feldes ortsaufgelöst erfassten Messwerten und geostatistischen Methoden, insbesondere mittels Kriging oder Nearest Neighbourhood Analyse erstellt wird.

**4.** Verfahren nach einem der vorhergehenden Ansprüche, **dadurch gekennzeichnet, dass** das Verfahren beim Pflanzenschutz, der Ernte von Getreide, der Bodenbearbeitung und/oder der Bestimmung von Fahrtrouten der jeweiligen Landmaschine unter Berücksichtigung der Befahrbarkeit eingesetzt wird.

**5.** Verfahren nach einem der vorhergehenden Ansprüche, **dadurch gekennzeichnet, dass** mindestens ein unbemanntes Luftfahrzeug, das mit mindestens zwei Sensoren, die ausgewählt sind aus einem Temperatursensor, einem Hygrometer, Windmesser, einem optischen Detektor, der zur Erfassung elektromagnetsicher Strahlung aus dem Wellenlängenbereich des sichtbaren, NIR und/oder des IR-Lichtes ausgebildet ist, einem Radar-, LIDAR-Sensor und Ultraschallsensor ausgestattet ist, eingesetzt wird.

**6.** Verfahren nach einem der vorhergehenden Ansprüche, **dadurch gekennzeichnet, dass** Lufttemperatur und/oder relative Luftfeuchte in einem Abstand zur Oberfläche des Bodens oder des Pflanzenbewuchses von mindestens 300 mm bis maximal 750 mm, bevorzugt in einem Abstand von 500 mm bis 2000 mm gemessen wird.

**7.** Verfahren nach einem der vorhergehenden Ansprüche, **dadurch gekennzeichnet, dass** mit bildanalytischen Verfahren der Benetzungsgrad von Pflanzenoberflächen mit Wasser und/oder Pflanzenschutzmittel bestimmt wird.

**8.** Verfahren nach einem der vorhergehenden Ansprüche, **dadurch gekennzeichnet, dass** die Werte für den jeweiligen meteorologisch basierten Einsatzindex für einen Pflanzenschutz mit der Gleichung:

$MBEI_{PS}$ = A + B * Temperatur [°C] - C * rel. Luftfeuchte [%] + D * Windgeschwindigkeit [m/s] + Thermikwert - Benetzungswert der Pflanzenoberfläche mit A = 0,6 B = 0,02 C = 0,005 D = 0,02 wobei die Temperatur = (3 * Lufttemperatur in 500 mm oberhalb Applikationsebene + Temperatur Applikationsebene) / 4 ist und wobei die Applikationsebene die Oberfläche der Pflanzen, auf die das jeweilige Pflanzenschutzmittel PSM ausgebracht wird oder der Boden, falls kein Pflanzenbestand vorhanden ist,

der Thermikwert = 0,075 bei einer mittleren Thermik und 0,1 bei einem starken Termikwert und

der Benetzungswert = 0,03 für einen mittleren Benetzungsgrad und 0,06 für einen hohen (ohne Pflanzenbewuchs Wert = 0) ist,

Globalstrahlung?

bei der Bodenbearbeitung mit der Gleichung:

$$MBEI_{BB} = A + B * \text{Temperatur [°C]} - C * \text{rel. Luftfeuchte [\%]} + D * \text{Windgeschwindigkeit [m/s]} + E * \text{Globalstrahlung [W/m}^2\text{]} + F - G * \text{RADAR\_Klasse} * \text{Hyperspektral\_Wert}$$

mit A = 0,05 B = 0,02 C = 0,005 D = 0,02 E = 0,001 F = 1,3 G = 0,11
wobei
die Temperatur = (0,5 * Lufttemperatur in 2000 mm über Boden + 0,5 * Bodentemperatur) ist,
bei der Bestimmung Werte für die Getreideernte mit der Gleichung:

$$MBEI_{MD} = A + B * \text{Temperatur [°C]} - C * \text{rel. Luftfeuchte [\%]} + D * \text{Windgeschwindigkeit [m/s]} + F - G * \text{RADAR\_Klasse} * NDVI$$
$$\text{mit } F = 1{,}3 \text{ und } G = 0{,}11$$

und
bei der Bestimmung der Befahrbarkeit mit der Gleichung:

$$MBEI_{BF} = A * \text{(Temperatur in 2 m Höhe - Bodentemperatur [K])} + B * \text{(rel. Luftfeuchte in 2 m Höhe – Boden\_rel.Luftfeuchte [\%])} + C * \text{RADAR\_Klasse} + D * \text{Hyperspektral\_Wert} + E * \text{sichtbares Wasser} - F * \text{Tage seit letzter Bodenbearbeitung [Anzahl]} + G * \text{Arbeitstiefe [cm]}$$

mit A = 0,025 B = 0,03 C =-0,03 D = 0,02 E = 1 F = 0,0001 G = 0,001
wobei

- sichtbares Wasser den Wert 1 für "vorhanden" und 0 für nicht vorhanden annimmt, und mit
- Arbeitstiefe die Tiefe bei der letzten Bodenbearbeitung gemeint ist, bestimmt werden.

9. Verfahren nach dem vorhergehenden Anspruch, **dadurch gekennzeichnet, dass** bei der Berechnung von MBEI-Werten Wetterprognosedaten sowie bei der Berechnung des MBEI-Wertes für die Bodenbearbeitung $MBEI_{BB}$ und des MBEI-Wertes für die Getreideernte $MBEI_{MD}$ die Globalstrahlung berücksichtigt wird/werden.

10. Verfahren nach einem der vorhergehenden Ansprüche, **dadurch gekennzeichnet, dass** bei Überschreitung und/oder einem nicht Erreichen eines vorgegeben Grenzwerts für den meteorologisch basierten Einsatzindex die jeweilige Bearbeitung und/oder das Befahren der gesamten oder einem entsprechenden Teil des jeweiligen Feldes beendet oder gar nicht erst begonnen wird.

11. Verfahren nach einem der vorstehenden Ansprüche, **gekennzeichnet, durch** ein Erkennen günstiger Zeitfenster und Feldzonen für eine umweltschonende, effektive und kostensparende Bewirtschaftung.

12. Verfahren nach einem der vorstehenden Ansprüche, **dadurch gekennzeichnet, dass** zu Beginn der jeweiligen Arbeiten auf einem Feld ein Prescan mit der Ermittlung von Messwerten über die Fläche eines Feldes oder einer größeren zur Bearbeitung oder zum Befahren vorgesehenen Bereich einer Fläche eines jeweiligen Feldes durchgeführt wird, wobei das Luftfahrzeug die gesamte bzw. die jeweilige Fläche abfliegt und die verschiedenen Parameter ortsaufgelöst erfasst, auf deren Basis eine erste Bearbeitungs- bzw. Streckenkarte erstellt wird.

13. Verfahren nach einem der vorstehenden Ansprüche, **dadurch gekennzeichnet, dass** immer wieder das gesamte Restfeld gescannt wird, um Trends in den Parameterverläufen zu ermitteln und entsprechend zu berücksichtigen.

14. Verfahren nach einem der vorstehenden Ansprüche, **dadurch gekennzeichnet, dass** das Luftfahrzeug so gesteuert wird, dass es die jeweilige Landmaschine begleitet.

15. Verfahren nach einem der vorstehenden Ansprüche, **dadurch gekennzeichnet, dass** durch das Landmaschinen begleitende Fliegen des Luftfahrzeugs und durch Restfeldscans die ortsaufgelöst erfassten und bestimmten meteorologisch basierten Einsatzindex Werte kontinuierlich aktualisiert werden.

**Claims**

1. Method for identifying time windows and areas of an agriculturally used field with favorable conditions for an effective and environmentally acceptable use and/or driveability of agricultural machines, in which

   meteorological measured values, measured values relating to the nature of crops and/or of the soil are recorded in a spatially resolved manner within the area of a field or of a field region using at least one unmanned aerial vehicle equipped with sensors, and

   spatially resolved values for a meteorologically based application index are calculated using the measured values recorded, and

   a respective agricultural machine is controlled and/or operated based on the values determined in a spatially resolved manner for the meteorologically based application index; wherein

   the values for the meteorologically based application index taking into account at least two measured values selected from air temperature, the temperature of plants; relative air humidity, wind speed and direction, thermal, plant stock, vegetation density, soil moisture, soil density, soil type, surface quality usable field capacity and surface water present taking into account

   respective weighting factors, **characterized in that**

   depending on the work to be performed, certain parameters are drawn upon and used in the calculation accordingly, and

   the respective time of use and place of use of the respective agricultural machine is determined as a function of the values detected in a spatially resolved manner for the meteorologically based application index.

2. Method according to claim 1, **characterized in that** a map of the respective field or field region, which is used for the control and/or operation of the respective agricultural machine, is created using the calculated values for the meteorologically based application indices.

3. Method according to the preceding claim, **characterized in that** the respective map is created using the measured values and geostatistical methods detected in a spatially resolved manner at a point over the respective area of a field, in particular by means of Kriging or nearest neighbor analysis.

4. Method according to any one of the preceding claims, **characterized in that** the method is used during crop protection, harvesting of cereals, soil cultivation and/or determination of routes of travel of the respective agricultural machine taking into account the driveability.

5. Method according to any one of the preceding claims, **characterized in that** at least one unmanned aerial vehicle, which is equipped with at least two sensors selected from a temperature sensor, a hygrometer, wind meter, an optical detector, which is designed for detecting electromagnetic radiation from the wavelength range of the visible, NIR and/or IR light, a radar sensor, LIDAR sensor and ultrasonic sensor, is used.

6. Method according to any one of the preceding claims, **characterized in that** air temperature and/or relative air humidity is measured at a distance from the surface of the soil or of the crop growth of at least 300 mm to a maximum of 750 mm, preferably at a distance of 500 mm to 2000 mm.

7. Method according to any one of the preceding claims, **characterized in that** the degree of wetting of crop surfaces with water and/or crop protection agents is determined using image analysis methods.

8. Method according to any one of the preceding claims, **characterized in that** the values are determined for the respective meteorologically based application index for crop protection with the equation:
   $MBEI_{PS}$ = A + B * Temperature [°C] - C * Rel. Humidity [%] + D * Wind Speed [m/s] + Thermal Value - Wetting Value of the Plant Surface where A = 0.6 B = 0.02 C = 0.005 D = 0.02, wherein the temperature = (3 * Air Temperature at 500 mm above application level) / 4, and wherein the application level is the surface of the crops to which the respective crop protection product PSM is applied, or the soil, if no crops are present,

   the thermal value = 0.075 with a mean thermal and 0.1 with a strong thermal value, and
   the wetting value = 0.03 for a mean wetting level and 0.06 for a high (without crop growth value = 0),
   Global radiation?
   during soil cultivation with the equation:

$$MBEI_{BB} = A + B * Temperature [°C] - C * Rel. Humidity [\%] + D * Wind Speed [m/s]$$
$$+ E * Global Radiation [W/m^2] + F - G * RADAR\_Class * Hyperspectral\_Value$$

where A = 0.05 B = 0.02 C = 0.005 D = 0.02 E = 0.001 F = 1.3 G= 0.11
wherein

the temperature = (0.5 * Air Temperature at 2000 mm above the soil + 0.5 * Soil Temperature),

when determining values for the cereal harvest with the equation:

$$MBEI_{MD} = A + B * Temperature [°C] - C * Rel. Humidity [\%] + D * Wind Speed$$
$$[m/s] + F - G * RADAR\_Class * NDVI$$

where F = 1.3 and G = 0.11
and
when determining the driveability with the equation:

$$MBEI_{BF} = A * (Temperature\ at\ an\ altitude\ of\ 2\ m - Soil\ Temperature\ [K]) + B *$$
$$(Relative\ Humidity\ at\ an\ altitude\ of\ 2\ m - Soil\_Rel.\ Humidity\ [\%])\ C + *$$
$$RADAR\_Class + D * Hyperspectral\_Value + E * Visible\ Water - F * Days\ since$$
$$last\ soil\ cultivation\ [Number] + G * Working\ Depth\ [cm]$$

where A = 0.025 B = 0.03 C =-0.03 D = 0.02 E = 1 F = 0.0001 G = 0.001
wherein

- visible water assumes the value 1 for "present" and 0 for not present, and where
- working depth means the depth during the last soil cultivation.

9. Method according to the preceding claim, **characterized in that** in the calculation of MBEI values weather forecast data, and in the calculation of the MBEI value for the soil cultivation $MBEI_{BB}$ and the MBEI value for the cereal harvest $MBEI_{MD}$, the global radiation is/are taken into account.

10. Method according to any one of the preceding claims, **characterized in that** if a predetermined limit value for the meteorological-based application index is exceeded and/or not achieved, the respective cultivation and/or the driving of the entire or a corresponding part of the respective field is terminated or not started at all.

11. Method according to any one of the preceding claims, **characterized by** detecting favorable time windows and field zones for an environmentally acceptable, effective and cost-saving cultivation.

12. Method according to any one of the preceding claims, **characterized in that** at the beginning of the respective work on a field a prescan is carried out with the determining of measured values over the area of a field or of a larger region of an area of a respective field intended for cultivation or driving, wherein the aircraft flies over the entire or the respective area and in a spatially resolved manner detects the different parameters on the basis of which a first cultivation or route map is created.

13. Method according to any one of the preceding claims, **characterized in that** the entire residual field is scanned repeatedly in order to determine trends in the parameter profiles and to take them into account accordingly.

**EP 3 685 648 B1**

**14.** Method according to any one of the preceding claims, **characterized in that** the aircraft is controlled such that it accompanies the respective agricultural machine.

**15.** Method according to any one of the preceding claims, **characterized in that** the meteorologically based application index values, which are recorded and determined in a spatially resolved manner by the flying of the aircraft accompanying the agricultural machines and by residual field scans, are continuously updated.


**Revendications**

**1.** Procédé d'identification de fenêtres temporelles et de zones superficielles d'un champ agricole présentant des conditions avantageuses pour une utilisation efficace et respectueuse de l'environnement et/ou facilité de conduite des machines agricoles, dans lequel,

au moyen d'au moins un véhicule aérien non habité équipé de capteurs, des valeurs de mesure météorologiques, des valeurs de mesure sur la constitution de plantes et/ou du sol sont détectées à résolution spatiale dans la surface d'un champ ou d'une zone de champ et
des valeurs à résolution spatiale pour un indice d'utilisation basé sur la météorologie sont calculées au moyen des valeurs de mesure détectées et
une machine agricole respective est commandée et/ou utilisée sur la base des valeurs à résolution spatiale déterminées pour l'indice d'utilisation basé sur la météorologie ;
les valeurs pour l'indice d'utilisation basé sur la météorologie étant calculées en tenant compte d'au moins deux valeurs de mesure, qui sont choisies parmi la température de l'air, la température de plantes, l'humidité relative de l'air, la vitesse et direction du vent, l'ascendance thermique, la végétation, la densité de la végétation, l'humidité du sol, la densité du sol, le type de sol, l'état de surface, la capacité au champ utile et l'eau de surface existante,
en tenant compte de facteurs de priorisation respectifs, **caractérisé en ce que,**
selon le travail à réaliser, des paramètres spécifiques sont utilisés et calculés en conséquence et
que le moment d'utilisation et le lieu d'utilisation respectifs de la machine agricole respective sont déterminés en fonction des valeurs à résolution spatiale détectées pour l'indice d'utilisation basé sur la météorologie.

**2.** Procédé selon la revendication 1, **caractérisé en ce que**, avec les valeurs calculées pour l'indice d'utilisation basé sur la météorologie, une carte du champ ou de la zone de champ respectif est créée, laquelle est utilisée pour la commande et/ou l'utilisation de la machine agricole respective.

**3.** Procédé selon la revendication précédente, **caractérisé en ce que** la carte respective est créée au moyen des valeurs de mesure détectées à résolution spatiale ponctuellement sur la surface respective d'un champ et de méthodes géostatistiques, en particulier au moyen de krigeage ou d'analyse du voisin le plus proche.

**4.** Procédé selon l'une quelconque des revendications précédentes, **caractérisé en ce que** le procédé est utilisé pour la protection de plantes, la récolte de blé, le travail du sol et/ou la détermination de trajets de la machine agricole respective en tenant compte de la navigabilité.

**5.** Procédé selon l'une quelconque des revendications précédentes, **caractérisé en ce qu'**au moins un véhicule aérien non habité, lequel est équipé d'au moins deux capteurs, lesquels sont choisis parmi un capteur de température, un hygromètre, un anémomètre, un détecteur optique, lequel est conçu pour la détection de rayonnement électromagnétique de la plage de longueur d'onde de la lumière visible, lumière PIR et/ou lumière IR, un capteur radar, un capteur LIDAR et un capteur à ultrasons, est utilisé.

**6.** Procédé selon l'une quelconque des revendications précédentes, **caractérise en ce que** la température et/ou l'humidité relative de l'air sont mesurées à une distance de la surface du sol ou de la couverture végétale d'au moins 300 mm jusqu'à 750 mm maximum, de préférence à une distance de 500 mm à 2 000 mm.

**7.** Procédé selon l'une quelconque des revendications précédentes, **caractérisé en ce que** le niveau de mouillage de la surface des plantes avec de l'eau et/ou des produits phytosanitaires est déterminé au moyen d'un procédé d'analyse d'images.

**8.** Procédé selon l'une quelconque des revendications précédentes, **caractérisé en ce que** les valeurs de l'indice d'utilisation basé sur la météorologie sont déterminées, pour une protection des plantes, au moyen de l'équation :

$IUBM_{PP}$ = A + B * température [°C] - C * humidité rel. de l'air [%] + D * vitesse du vent [m/s] + valeur d'ascendance thermique - valeur de mouillage de la surface des plantes avec A = 0,6 B = 0,02 C = 0,005 D = 0,02, dans laquelle la température = (3 * température de l'air à 500 mm au-dessus du plan d'application + température sur plan d'application) / 4 et dans laquelle le plan d'application est la surface des plantes, sur lesquelles le produit phytosanitaire PP respectif est épandu, ou du sol, si aucune végétation n'est présente,
la valeur d'ascendance thermique = 0,075 lors d'une ascendance thermique moyenne et 0,1 lors d'une ascendance thermique forte et
la valeur de mouillage = 0,03 pour un niveau de mouillage moyen et 0,06 pour un élevé (sans végétation valeur = 0),
rayonnement global ?
pour le travail du sol au moyen de l'équation :

$IUBM_{TS}$ = A + B * température [°C] - C * humidité rel. de l'air [%] + D * vitesse du vent [m/s] + E * rayonnement global [W/m²] + F - G * classe_RADAR * valeur_hyperspectrale

avec A = 0,05 B = 0,02 C = 0,005 D = 0,02 E = 0,001 F = 1,3 G = 0,11
dans laquelle

la température = (0,5 * température d'air à 2 000 mm au-dessus du sol + 0,5 * température sol),

pour la détermination des valeurs pour la récolte du blé au moyen de l'équation :

$IUBM_{MD}$ = A + B * température [°C] - C * humidité rel. de l'air [%] + D * vitesse du vent [m/s] + F - G * classe_RADAR * NDVI

avec F = 1,3 et G = 0,11
et
pour la détermination de la navigabilité au moyen de l'équation :

$IUBM_{NAV}$ = A * (température à 2 m de hauteur - température du sol [K]) + B * (humidité rel. de l'air à 2 m de hauteur – humidité rel. de l'air au sol [%]) + C * classe_RADAR + D * valeur_hyperspectrale + E * eau visible - F * jours depuis dernier travail du sol [nombre]+ G * profondeur de travail [cm]

avec A = 0,025 B = 0,03 C =-0,03 D = 0,02 E = 1 F = 0,0001 G = 0,001
dans laquelle

- l'eau visible prend la valeur 1 pour « présente » et 0 pour non présente, et
- profondeur de travail désigne la profondeur lors du dernier travail de sol

9. Procédé selon la revendication précédente, **caractérisé en ce que** des données de prévision météorologique sont prises en compte lors du calcul de valeurs d'IUBM, et que le rayonnement global est pris en compte pour le calcul de la valeur d'IUBM pour le travail du sol $IUBM_{TS}$ et de la valeur d'IUBM pour la récolte de blé $IUBM_{MD}$.

10. Procédé selon l'une quelconque des revendications précédentes, **caractérisé en ce que,** lors du dépassement et/ou de la non-atteinte d'une valeur limite prédéfinie pour l'indice d'utilisation basé sur la météorologie, le travail et/ou la conduite sur l'ensemble ou une partie correspondante du champ respectif sont terminés ou pas commencés du tout.

11. Procédé selon l'une quelconque des revendications précédentes, **caractérisé par** une reconnaissance d'une fenêtre temporelle et de zones de champ avantageuses pour une exploitation efficace, économique et respectueuse de l'environnement.

12. Procédé selon l'une quelconque des revendications précédentes, **caractérisé en ce que**, au début des travaux respectifs dans un champ, un pré-scannage comprenant la détermination de valeurs de mesure est effectué sur la surface d'un champ ou sur une grande zone prévue pour le travail ou la conduite d'une surface d'un champ respectif, le véhicule aérien survolant la surface entière ou respective et détectant à résolution spatiale les différents paramètres, sur la base desquels une première carte de travail ou de trajets est créée.

13. Procédé selon l'une quelconque des revendications précédentes, **caractérisé en ce que** le champ restant entier est continuellement scanné, afin de déterminer des tendances dans les cours des paramètres et les prendre en compte en conséquence.

14. Procédé selon l'une quelconque des revendications précédentes, **caractérisé en ce que** le véhicule aérien est commandé de telle façon qu'il accompagne la machine agricole respective.

15. Procédé selon l'une quelconque des revendications précédentes, **caractérisé en ce que** les valeurs de l'indice d'utilisation basé sur la météorologie détectées à résolution spatiale et déterminées sont continuellement mises à jour par le vol du véhicule aérien qui accompagne la machine agricole et par le scannage du champ restant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180092295 A1